# EUROPÄISCHE PATENTANMELDUNG

(11) **EP 4 138 264 A1**
(43) Veröffentlichungstag der Anmeldung: **22.02.2023**
(21) Anmeldenummer: 22184859.1
(22) Anmeldetag: 14.07.2022
(51) Int. Cl.: H02J 7/24, H02J 7/00

(54) **VORRICHTUNG UND VERFAHREN ZUM SCHUTZ EINES BATTERIELASTRELAIS IN EINEM ELEKTRISCH ANGETRIEBENEN KRAFTFAHRZEUG**

(30) Priorität: 03.08.2021 DE 102021120196
(71) Anmelder: Marquardt GmbH, 78604 Rietheim-Weilheim (DE)
(72) Erfinder: ENGESER, Janis, 78736 Epfendorf (DE); RECKERMANN, Matthias, 78573 Wurmlingen (DE); REHM, Markus, 78052 Villingen (DE)
(74) Vertreter: Staeger & Sperling Partnerschaftsgesellschaft mbB

(57) **Zusammenfassung**

Vorladeschaltung zum Schutz eines Lastrelais zur Verbindung eines Energiespeichers mit einem Laststromkreis, angeordnet in einer Ladeschaltung mit einer Zwischenkreiskapazität, wobei zwischen dem Gleichspannungsausgang und der Batterie ein Zwischenkreiskondensator vorgesehen ist und eine Messeinrichtung vorgesehen ist, welche die Differenzspannung U_{diff} zwischen der Spannung Vₗᵢₙₖ am Zwischenkreiskondensator und der Spannung V_{bat} an dem Energiespeicher erfasst und sobald die Differenzspannung U_{diff} einen vorgegebenen Sollwert Uₛₒₗₗ überschreitet zunächst ein Ladevorgang des Zwischenkreiskondensators von dem Energiespeicher erfolgt bis die Differenzspannung U_{diff} einen vorgegebenen Sollwert Uₛₒₗₗ unterschreitet und dann mittels Aktivieren des Lastrelais der Laststromkreis geschlossen wird, um eine Verbindung mit dem Energiespeicher herzustellen.

## Beschreibung

Die vorliegende Erfindung betrifft eine Vorrichtung und Verfahren zum Schutz eines Batterielastrelais zum Verbinden des Energiespeichers mit einem Laststromkreis in einem elektrisch angetriebenen Kraftfahrzeug.

In modernen elektrisch angetriebenen Fahrzeugen werden zunehmend Hochspannungssysteme und Geräte eingesetzt, die in gewissen Betriebszuständen miteinander verbunden werden bzw. elektrische Lasten mit dem Energiespeicher verbunden werden müssen.

Typische Schalteinrichtungen zum Verbinden solcher Kreise, wie Relais oder Batterielastrelais haben aber den Nachteil, dass Verlustleistungen auftreten und die Lebensdauer aufgrund der Schaltvorgänge bei den vorhandenen typischen hohen Systemspannungen im Fahrzeug deutlich abnimmt. Die Verbindung mittels eines herkömmlichen Batterieschalter ist eine vom Schaltungsaufwand sehr triviale Methode. Bei der Verbindung mittels Kfz-Relais wird ein handelsübliches Kfz-Relais mit der Spule verwendet. Bekannt sind z. B. spezielle Relais, die extra für die Batterieverbindung entwickelt wurden. Diese Relais besitzen Schaltkontakte, die einen höheren Strom schalten können.

Der Idealzustand von spannungsfreiem Schalten zwischen einer Ladeeinrichtung und der Batterie sind in der Praxis nicht gegeben. Ein weiteres Problem sind bei Gleichspannungsschaltvorgängen der Lichtbogen, der zwischen den Schaltkontakten auftreten kann und zu einem Abbrand oder zumindest zu einer schnelleren Alterung führt.

Moderne Elektrofahrzeuge werden z. B. an einer Batterieversorgungsspannung von typischerweise 400 VDC bis 870 VDC über einen AC/DC-Wandler, welcher aus einer ein- oder mehrphasiger Netzwechselspannung den erforderlichen Batteriestrom generiert, geladen. Zum Verbinden der Batterie mit dem Laststromkreis bedarf es einem Schaltorgan, wie einem Lastrelais. Relevant für den Einfluss auf das Lastrelais ist auch der Potentialunterschied zwischen der Spannung am Zwischenkreiskondensator des Wandlers und der aktuell vorhandenen Batteriespannung. Wie bereits erläutert, wäre ein spannungsfreies Schließen (und Trennen) über das Batterierelais wünschenswert.

Die Spannungsdifferenz zwischen der Batterie und dem Zwischenkreiskondensator (Batterie-Kondensatorspannungsdifferenz) wird üblicherweise mittels einer Spannungsmessung bestimmt. Allerdings ist es in der Praxis schwierig bzw. aufwendig die Batterie- und Kondensatorspannung am Zwischenkreiskondensator genau zu ermitteln bzw. zu vergleichen. Dies liegt unter anderem daran, dass beim Einsatz eines Mikrokontrollers wegen den Toleranzen die Eingangsmesswerte zu ungenau sind.

Im Stand der Technik gibt es verschiedene Lösungen, um die zuvor genannte Problematik zu reduzieren. Das Laden über ein speziell konfiguriertes Widerstandsnetzwerk (auch mit PTCs), Laden über einen OBC (DCDC-Wandler) oder zum Beispiel durch eine softwaregesteuerte Schaltung, was zusätzlichen Aufwand bedeutet. Wegen der wichtigen Anforderung das Vorladezeitintervall bei den genannten Verfahren möglichst kurz zu halten, kann als Kompromiss das Laderelais bereits beim Erreichen von wenigen Volt Spannungsdifferenz geschlossen werden. Somit kann mit vertretbarem Aufwand die Differenzspannungsmessung mit ca. 1% Genauigkeit erfolgen, welches bei maximaler Batteriespannung aber bereits zu einem Fehler von mehreren Volt führt. Dieses Ergebnis ist unbefriedigend und es besteht daher ein Bedürfnis nach einer verbesserten Lösung.

Der Erfindung liegt deshalb die Aufgabe zugrunde, vorbesagte Nachteile zu umgehen und ein Konzept vorzuschlagen, bei dem eine längere Lebensdauer des Schaltrelais gewährleistet ist.

Diese Aufgabe wird durch eine Lösung gemäß den Merkmalen der unabhängigen Ansprüche gelöst.

Ein Grundgedanke der vorliegenden Erfindung besteht darin, eine parasitäre n Zwischenkreiskapazität zu verwenden, welcher zwischen dem Ausgang des AC/DC-Wandlers und der zu ladenden Batterie kontaktiert ist. Diese Zwischenkreiskapazität wird über eine Vorladeschaltung im Konverter vorgängig von der Batterie auf die aktuelle Batteriespannung (V_{bat}) aufgeladen. Sobald die Spannung (Vₗᵢₙₖ) am Zwischenkreiskondensator der Batteriespannung (V_{bat}) entspricht, kann der Laststromkreis durch das Hauptrelais verbunden werden. Dies geschieht in einer bevorzugten Ausgestaltung der Erfindung über Schließen eines Hauptrelais, um im Lastkreis eine Verbindung mit der Batterie herzustellen. Auf diese Weise werden Relaiskontakt- Einschaltstromspitzen, welche die Kontakte frühzeitig verschleißen und die Relaislebensdauer verkürzten erfindungsgemäß verhindert.

Um die eigentliche Batterieladung mit dieser Vorladeschaltung zu starten werden im Wesentlichen die folgenden Verfahrensschritte durchgeführt:
a) Erfassen bzw. Vergleichen der Differenzspannung V_{diff} zwischen der Spannung an der Batterie V_{bat} und der Spannung am Zwischenkreiskondensator Vₗᵢₙₖ mit V_{diff} = V_{bat} - Vₗᵢₙₖ
b) Vorladen des Zwischenkreiskondensators durch die Batterie, falls der Differenzspannungsbetrag V_{diff} über einer vorgegebenen Sollwert-Spannungsschwelle liegt, derart bis die Differenzspannung bzw. der Differenzspannungsbetrag kleiner als die vorgegebene Sollwert-Spannungsschwelle ist und danach
c) Schließen des Hauptrelais (zum Verbinden mit dem Energiespeicher).

Die erfindungsgemäße Lösung kann in Abhängigkeit der Spannungsdifferenz V_{diff} eigenständig zwischen Vor- und Schnellladen entscheiden und kann sogar beim Ausfall vom OBC (OnboardComputer) die komplette Vorladefunktion übernehmen, ohne das Zeitlimit einzuhalten. Diese Lösung stellt ferner eine gegenüber den bekannten Schaltungen des Standes der Technik kompaktere Lösung dar, was den erforderlichen Bauraum minimiert.

Der Ladestrom selbst wird durch eine MOSFET-Schaltung bestimmt, was eine präzise Ladestromregelung (Ladestromleistungsbegrenzung über dem MOSFET) bedeutet.

Die vorstehend offenbarten Merkmale sind dabei beliebig kombinierbar, soweit dies technisch bei der Umsetzung der Erfindung sinnvoll möglich ist und diese nicht im technischen Widerspruch zueinanderstehen, auch wenn diese Kombination der Merkmale nicht ausdrücklich offenbart ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

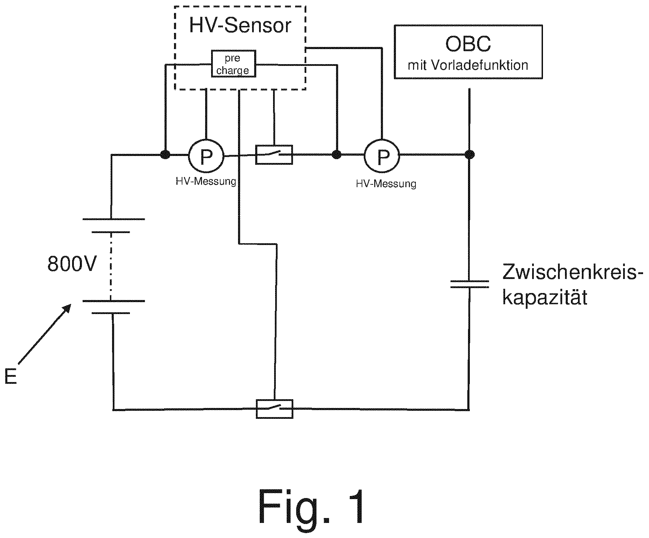

Die Figuren 1 bis 5 sind lediglich beispielhaft schematisch. Gleiche Bezugszeichen in den Figuren weisen auf gleiche funktionale und/oder strukturelle Merkmale hin. Die Erfindung wird nachfolgend mit Bezug auf die Fig. 1 bis 5 anhand beispielhafter Ausführungsformen näher erläutert.

In der Figur 1 findet sich eine schematische Prinzipzeichnung einer erfindungsgemäßen Vorladeschaltung. Der Energiespeicher E weist eine Batterienennspannung von 800 V DC auf. Ferner findet sich der Gleichspannungsausgang auf der rechten Seite der Zeichnung mit dem Zwischenkreiskondensator ZK, der als Zwischenkreiskondensator wirkt. Die Spannung Vₗᵢₙₖ am Zwischenkreiskondensator und die Spannung V_{bat} am Energiespeicher E wird erfasst und daraus die Differenzspannung U_{diff} ermittelt. Ferner sind zwei Trennrelais gezeigt und ein Vorladekreis über den HV-Sensor zum Vorladen des Zwischenkreiskondensators.

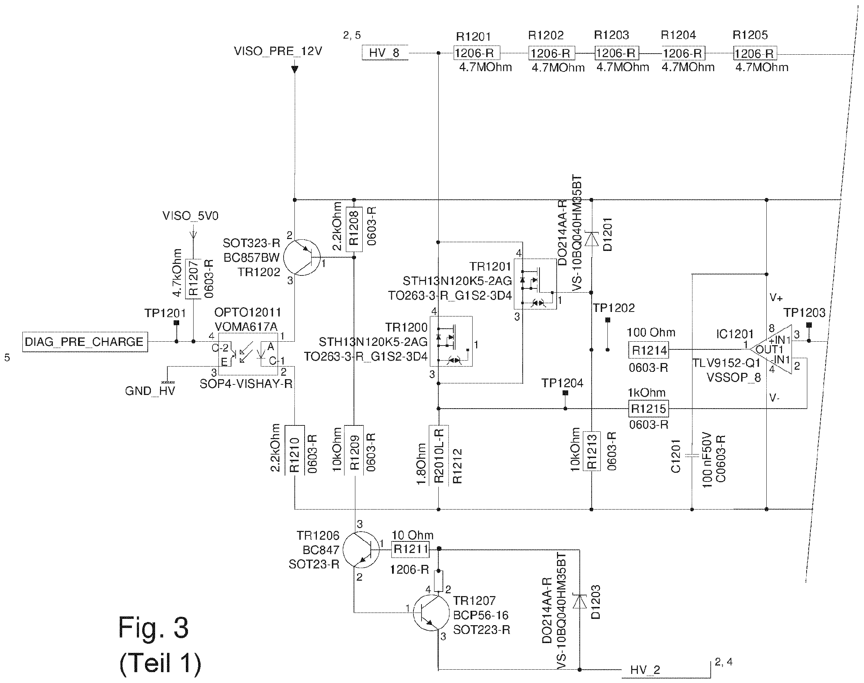

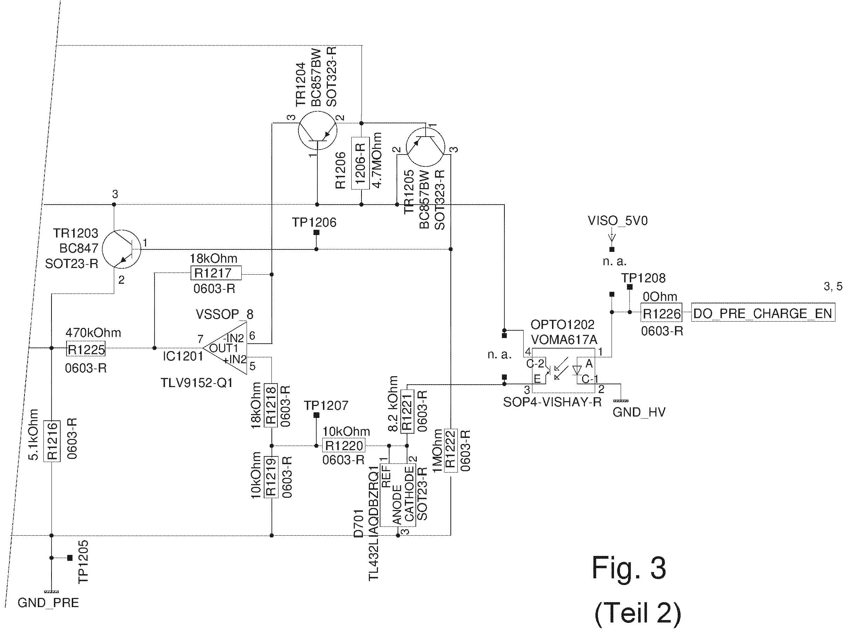

In der Figur 3 findet man U1, U3 und Rs wieder als spannungsgesteuerte Stromquelle. U2, R1, R2 mit der Referenzspannungsquelle V1 entspricht dem Notvorladeverstärker, dessen Ausgang über den Spannungsteiler R4, R5 den Notvorladestrom als Spannung über R5 bestimmt. Der Spannungsteiler R4, R5 reduziert die Stromführungsgröße in U3, so dass eine einfache Spannungsreferenz U6 verwendet werden kann.

Der Stromteiler I-Teiler1 entspricht Q4, welcher einerseits 1/β des Stromes durch R1 auf die Betriebsspannung leitet und zum andererseits den Kollektorstrom I = {IR1 / (1+1/β)} zu R2 und U2 koppelt. Dies gilt, solange (Vbat-Vlink)>(Vcc-Vbe) ist.

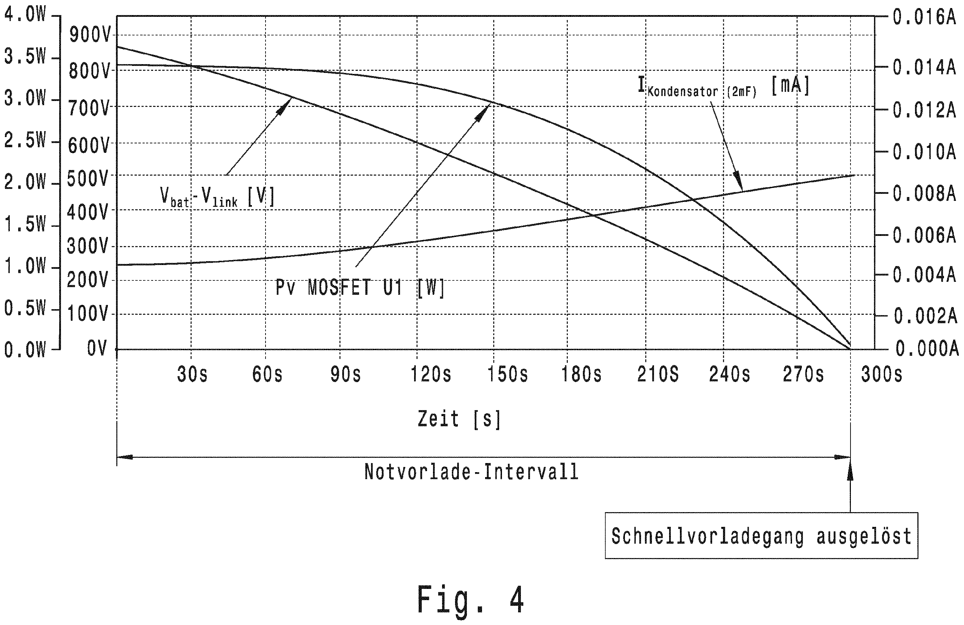

Auf diese Weise wird die Notvorladeschleife geschlossen und entspricht dem Notvorladen Szenario. Dabei fließt immer ein Strom aus der Batterie durch R1 und Q4EB in Vcc und weiter durch R6, Q2 und Q1 zu Vlink. Kurvenformen des Notvorladeintervalls zeigt die Abbildung 4. Hierbei ist ersichtlich, dass die Verlustleistung im MOSFET (U1) in diesem Dimensionierungsbeispiel nur moderat von (Vbat-Vlink) beeinflusst wird und der Kondensator nur leicht in rechter Richtung parabelförmig ansteigt.

Ab der Bedingung (Vbat-Vlink) < (Vcc-Vbe) wird Q4 stromlos. Damit ist R1 nicht mehr über Q4 an U2 gekoppelt; die Notvorladeschleife ist offen und der Ausgang von U2 geht auf V1.

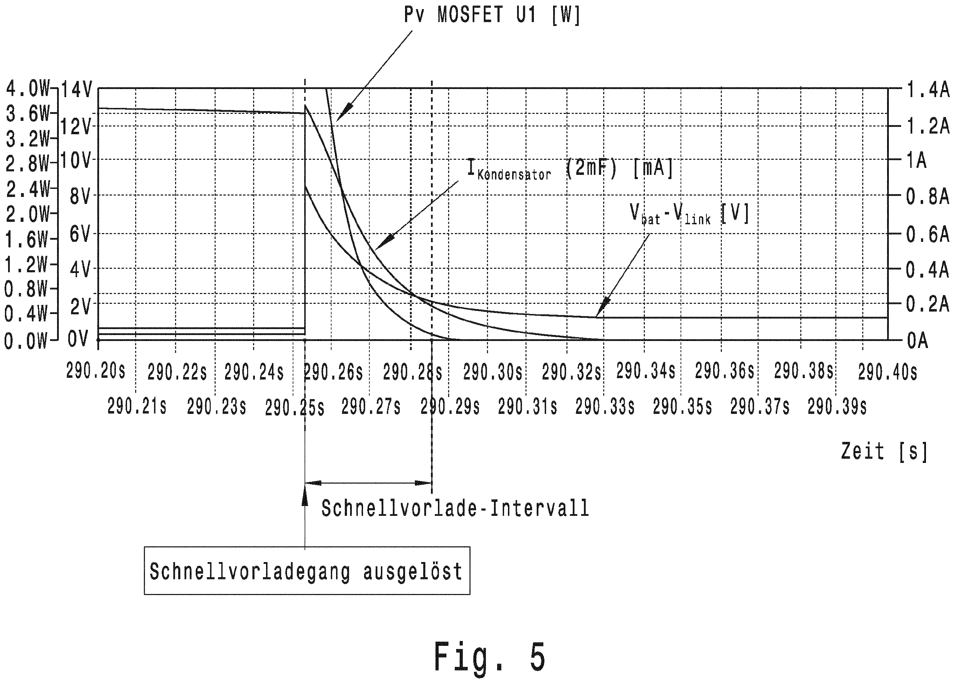

Ab der Differenzspannung (Vbat-Vlink)<(Vcc+Vbe) wird Q5 leitend und arbeitet in Emitterschaltung, da dessen Basisstrom von Vcc über R1 zu V_{bat} fließen kann. Die Schaltung befindet sich nun im Schnellvorladebetrieb. Der hochohmige Rschnell nähert eine Stromquelle an und maximiert dadurch die Spannungsverstärkung in Q5. Der nachfolgende Buffer Q6 garantiert eine Stromverstärkung von Vi = IR5/I1 von > 10.000 und zwingt die Spannung über R5 auf Vcc - VQ5-CE - VQ6-BE. Folglich wird der MOSFET U1 auf V(R5/Rs) voll ausgesteuert, bzw. operiert im ohmschen Bereich bis (Vbat - Vlink) < 2V wird. Dann darf die Schnellvorladephase abgeschlossen werden. Entsprechende Signalverläufe sind in der Abbildung 5 gezeigt.

Der Strom von U1 fließt über den Darlington Q1, Q2 zu Vₗᵢₙₖ während des gesamten Vorladeintervalls. Dabei fließt auch ein Strom über R8 und R7 via Q2 zu Vₗᵢₙₖ. Der Spannungsteiler R8, R7 ist so dimensioniert, dass Q3 nur bei hohem Strom, während dem Schnellvorladen leitend wird. Dementsprechend gibt der Optokoppler U4 an dessen Kollektor eine tiefe Spannung aus, welche das Ende der Schnellvorladephase mit der positiven Flanke zu Vaux (z.B. 5V) signalisiert. Die Diode D1 dient als Transientenschutz von Q1 und leitet negative Spannungsspitzen von V_{bat}-Vₗᵢₙₖ über die Bodydiode von U1 zu Rs.

Es ist somit ersichtlich, dass der Umschaltmoment von Notvorladen zu Schnellvorladen und der Signalmoment mit der Bedingung V_{bat} = Vₗᵢₙₖ im Wesentlichen nur über Vcc und die Basis-Emitter Spannungen von Q4, Q5 bzw. Q1, Q2 bestimmt sind. Damit zeigt sich dieses Schaltungskonzept unabhängig gegenüber Widerstandsänderungen in R1. Weiter garantiert eine Umschalthysterese gegeben durch Q4 und Q5 von 2Vbe immer einen eindeutigen Betriebszustand und verhindert so ein mögliches toggeln um die Umschaltschwelle.

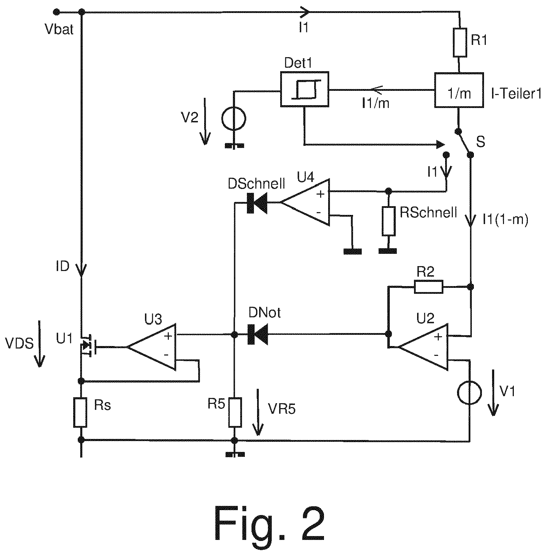

Die gezeigten Dioden Dnot und Dschnell von Abbildung 2 sind in Abbildung 3 nicht mehr nötig. R4 entkoppelt VR5 vom Ausgang U2 während dem Schnellvorladen und da VR5 während dem Notvorladen weit unter 5V bleibt, entkoppelt sich die BE-Strecke von Q6. Damit arbeiten beide Modi unabhängig voneinander.

Alternativ kann das Statussignal Dstatus auch mittels eines Spannungskomparators aus dem Ausgangssignal von U2 generiert werden, da dessen Ausgangspannung auf V1 springt sobald Q4 stromlos wird. Die Implementation über Q1 und Q2 entspricht einem unabhängigen Verarbeiten der Modus-Umschaltung und Statussignalgenerierung.

In vorteilhafter Weise kann diese Auswertung des Zwischenkreiskondensator- Ladestromes als Statussignal- Generierung auch direkt in eine Vorladeschaltung gemäß Abbildung 1 als einfache Erweiterung eingesetzt werden. Als weitere Option kann U4 von Abbildung 2 das Stromverhalten von U1 während der Schnellvorladephase verbessern. Hierzu arbeitet der Komparator U4 direkt mit VRschnell als Eingangsspannung anstelle von Q6, dann aber mit Diode Dschnell auf R5. Die größere Verstärkung bewirkt ein späteres Absinken von VGS in U1 während dem Schnellvorlade- Intervall. Das Schnellvorlade- Intervall wird dadurch aber nur unwesentlich kürzer, da die Kondensator Hauptladung gleich zu Beginn der Schnellvorladephase passiert (siehe hierzu Abbildung 5).

Die Erfindung beschränkt sich in ihrer Ausführung insofern nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Vorladeschaltung zum Schutz eines Lastrelais zur Verbindung eines Energiespeichers mit einem Laststromkreis, angeordnet in einer Ladeschaltung vorzugsweise zwischen einem Gleichspannungsausgang eines AC/DC-Wandlers und einem zu ladenden Energiespeicher, wobei zwischen dem Gleichspannungsausgang und der Batterie ein Zwischenkreiskondensator vorgesehen ist und eine Einrichtung zum Spannungsvergleich vorgesehen ist, welche die Differenzspannung U-_{diff} zwischen der Spannung Vₗᵢₙₖ am Zwischenkreiskondensator und der Spannung V_{bat} an dem Energiespeicher erfasst und sobald die Differenzspannung U_{diff} einen vorgegebenen Sollwert Uₛₒₗₗ überschreitet zunächst ein Ladevorgang des Zwischenkreiskondensators von dem Energiespeicher erfolgt bis die Differenzspannung U_{diff} einen vorgegebenen Sollwert Uₛₒₗₗ unterschreitet und dann mittels Aktivieren des Lastrelais der Laststromkreis geschlossen wird, um eine Verbindung mit dem Energiespeicher herzustellen.

2. Vorladeschaltung nach Anspruch 1, **dadurch gekennzeichnet, dass** die Verbindung des Ladestromkreises mittels des Schaltrelais nach erfolgtem Teil- oder Schnellladen des Energiespeichers nur dann erfolgt, wenn die Differenzspannung U_{diff} einen vorgegebenen Sollwert Uₛₒₗₗ unterschreitet.

3. Vorladeschaltung nach Anspruch 1 oder 2, **dadurch gekennzeichnet, dass** die Differenzspannung U_{diff} geringer als 1% der Nennspannung des Energiespeichers beträgt.

4. Vorladeschaltung nach einem der vorhergehenden Ansprüchen, **dadurch gekennzeichnet, dass** die Schaltung gemäß der Fig. 3 umfasst ist.

5. Verfahren zum Schutz eines Lastrelais zum Verbinden eines Energiespeichers mit einem Laststromkreis, insbesondere in einem Kraftfahrzeug, vorzugsweise mit einer Vorladeschaltung nach einem der Ansprüche 1 bis 4 mit den folgenden Schritten:
- Ermitteln der Differenzspannung U_{diff} zwischen der Spannung an der Batterie U_{bat} und der Spannung am Zwischenkreiskondensator Vₗᵢₙₖ mit U_{diff} = U_{bat} - Vₗᵢₙₖ
- Vorladen des Zwischenkreisondensators durch die Batterie, falls die Differenzspannung U_{diff} über einer vorgegebenen Sollwert-Spannungsschwelle liegt, derart bis die Differenzspannung kleiner als die vorgegebene Sollwert-Spannungsschwelle ist und danach
- Aktivieren des Lastrelais.
